(19) **Europäisches Patentamt / European Patent Office / Office européen des brevets**

(11) **EP 2 071 287 A2**

(12) **EUROPÄISCHE PATENTANMELDUNG**

(43) Veröffentlichungstag:
**17.06.2009 Patentblatt 2009/25**

(51) Int Cl.:
*G01C 21/34* *(2006.01)*

(21) Anmeldenummer: 08014477.7

(22) Anmeldetag: **14.08.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **13.12.2007 DE 102007060590**

(71) Anmelder: **Deutsche Telekom AG**
**53113 Bonn (DE)**

(72) Erfinder:
• **Fastenrath, Ulrich**
 **53121 Bonn (DE)**
• **Becker, Markus, Dr.**
 **45239 Essen (DE)**

(54) **Verfahren zur Auswahl einer Route für eine dynamische Navigation von Individualverkehr**

(57) Es wird ein Verfahren zur Routenwahl und/oder zur Bestimmung der Wahrscheinlichkeit von geschätzten Ankunftszeiten und/oder zur Bestimmung einer Ankunftszeit (tz) mit vorgegebener Erreichungswahrscheinlichkeit vorgeschlagen, bei welchem die statistische Verteilung von Reisezeiten auf Netzkanten oder Routen (R1, R2), vorzugsweise in Form von bimodalen, im Extremfall delta-artigen, Verteilungen berücksichtigt wird.

Fig. 1

EP 2 071 287 A2

**Beschreibung**

GEBIET DER ERFINDUNG

Die Erfindung betrifft ein Verfahren zur Auswahl einer Route für eine dynamische Navigation von Individualverkehr sowie eine Vorrichtung, insbesondere Endgerät, eine Einrichtung, insbesondere Zentrale, und ein System dafür.

Unter "dynamischer Navigation" werden im Kontext des straßengebundenen Individualverkehrs Verfahren zur Navigation mittels Routenberechnung unter Berücksichtigung zeitlich veränderlicher Faktoren verstanden. An erster Stelle dieser Faktoren ist sicherlich die Verkehrslage zu nennen, aber auch andere verkehrsbeeinflussende Faktoren (Einflussfaktoren), wie das Wetter, der Straßenzustand oder Großereignisse sind relevant. Das Verfahren zur Navigation bzw. Routenberechnung kann dabei technisch verschiedenartig ausgeprägt sein: Das Verfahren kann z.B. in einem Endgerät ablaufen ("onboard-Navigation"), wobei das Endgerät mobil oder fest ins Fahrzeug eingebaut sein kann. Oder das Verfahren läuft in einer Zentrale ab ("offboard-Navigation"), wobei die berechneten Routen drahtlos in das Fahrzeug kommuniziert werden. Außerdem kann der Nutzer der Navigation verschiedene Anforderungen stellen bzw. Prioritäten setzen: Er kann nach der kürzesten, schnellsten, schönsten, risikoärmsten etc. Route verlangen. Allen diesen bekannten Verfahren zur Navigation und Routenberechnung ist gemeinsam, dass die o.g. zeitabhängigen Einflussfaktoren die zentralen Ergebnisse, wie z.B. die berechnete Route oder die erwartete Ankunftszeit, erheblich beeinflussen. Daher wird in allen bisher bekannten Verfahren und Lösungsansätzen zur dynamischen Navigation versucht, der Routenberechnung diese Einflussfaktoren zugänglich zu machen. Die aus dem Stand der Technik bekannten Lösungen umfassen zwei grundsätzlich verschiedene Herangehensweisen:

Eine erste herkömmliche Herangehensweise ist die Bereitstellung der Verkehrslage in "Echtzeit". Dabei wird der Routenberechnung eine möglichst aktuelle Beschreibung der Verkehrslage, zumeist in Form von kodierten Meldungen über Verkehrsstörungen, zuweilen auch in Form von geschätzten Reisezeiten auf Netzkanten (Streckenabschnitt zwischen zwei Anschlussstellen) zur Verfügung gestellt. Störungsmeldungen oder ungewöhnlich hohe Reisezeiten werden bei der Routenberechnung als erhöhte Streckenwiderstände interpretiert und beeinflussen so die o.g. zentralen Ergebnisse. Diese Form der Dynamisierung ist sowohl für "onboard" (drahtlose Bereitstellung der Verkehrslageinformation) als auch für "offboard"-Varianten (drahtgebundene Bereitstellung der Verkehrslageinformation) realisiert.

Jedoch hat diese Herangehensweise einen entscheidenden Nachteil: Da der interessante Teil der Route immer erst in der Zukunft durchfahren wird, wäre für die Berechnung dieses Teils der Route eine Prognose der Verkehrslage erforderlich. Die aktuelle Verkehrslage allein ist hierfür unzureichend, da sie sehr schnellen Veränderungen unterworfen ist. Nun ist einerseits noch kein Dienst verfügbar, welcher flächendeckende Prognosen zur Nutzung in der dynamischen Navigation zur Verfügung stellt, andererseits sind diesem Unterfangen durch die stochastische Natur des Verkehrs prinzipielle Grenzen gesetzt. Auch aufgrund dieser Einsichten bzw. Schwierigkeiten wurde bereits eine zweite Herangehensweise vorgeschlagen:

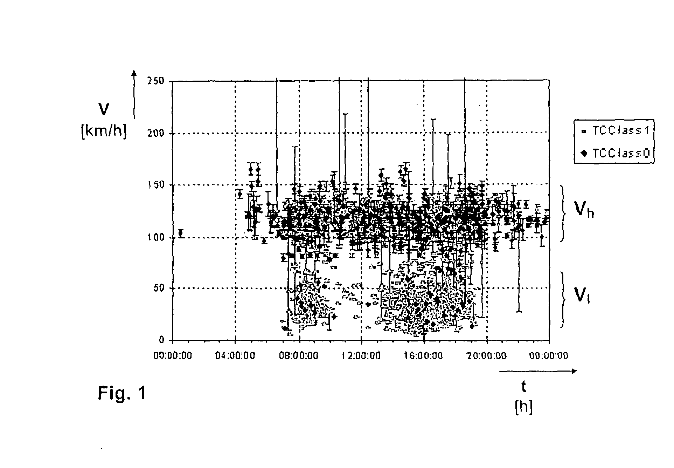

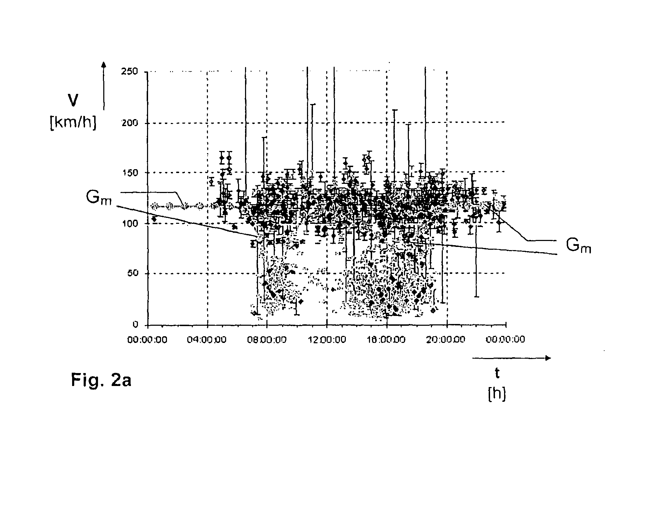

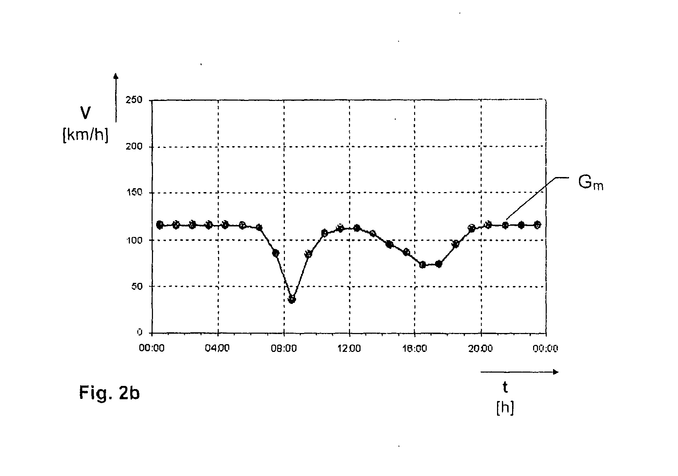

Diese zweite Herangehensweise stützt sich auf eine Hinterlegung historischer Verkehrsinformation. Es ist empirisch belegbar, dass einige Kenngrößen des Verkehrs Periodizitäten aufweisen. So ist z.B. die Verkehrsnachfrage als Funktion der Tageszeit (in Form einer sog. "q-Ganglinie") stark korreliert mit dem Wochentag. In der Folge sind etwa Verkehrsstörungen montags morgens und freitags nachmittags häufiger als zu anderen Zeiten. Daraus ergibt sich z.B. der Lösungsansatz, die für dynamische Navigation besonders relevante Größe, nämlich die Reisezeit bzw. Fahrgeschwindigkeit, ebenfalls in Form von statischen Ganglinien für die Routenberechnungsverfahren zu hinterlegen (sei es offboard oder onboard) und damit die Verkehrsprognose in Echtzeit verzichtbar zu machen. Dabei ergibt sich eine wesentliche Schwierigkeit, die hier anhand der beiliegenden Figuren 1 und 2a/b veranschaulicht wird: Die Fig. 1 zeigt Messwerte für mittlere streckenabschnittsbezogene Geschwindigkeiten. Diese entsprechen Reisezeiten gemäß der Formel: Reisezeit = Streckenabschnittslänge / Geschwindigkeit. Man erkennt, dass es Häufungen der Messwerte für hohe Geschwindigkeiten (entsprechend freiem Verkehr) und niedrige Geschwindigkeiten (entsprechend gestörtem Verkehr) gibt. Mittlere Werte der Geschwindigkeit werden sehr selten angenommen, d.h. die Häufigkeitsverteilung der Reisezeit ist bimodal. Hinterlegt man nun als Reisezeit-Ganglinie eine durch Mittelwerte der Reisezeiten bestimmte Ganglinie, wie in den Fig. 2a und 2b gezeigt, so nimmt diese Ganglinie unweigerlich diese seltenen Werte an und führt somit die Routenberechnung auf suboptimale Ergebnisse. Eine bimodale Verteilung wird also durch eine solche Mittelwertbildung nicht ausreichend charakterisiert.

In der von der Anmelderin zuvor eingereichten Patentanmeldung DE 10 2007 026 493 wird eine Lösung vorgeschlagen, bei der mindestens eine Route für mindestens einen Teilnehmer des Individualverkehrs berechnet wird, indem mindestens zwei Ganglinien aus einer Kenngröße bzw. Zustandsgröße (wie z.B. Verkehrsfluss, -dichte oder Reisezeit) ermittelt und für die Berechnung der Route hinterlegt werden, wobei für die Berechnung der Route ein Auswahlkriterium bereitgestellt wird, um eine der Ganglinien für die Berechnung der Route auszuwählen bzw. heranzuziehen. Vorzugsweise beschreibt eine der beiden Ganglinien den Zustand des freien Verkehrs und die andere Ganglinie beschreibt den Zustand des gestörten Verkehrs, wobei als Auswahlkriterium ein Indikator für aktuelle und/oder prognostizierte Störungen des Individualverkehrs genommen wird. Mit diesem sog. "dynamischen Selektor" wird eine deutliche Verbesserung der Routenberechnung erzielt. Dieses Verfahren ist besonders für solche Anwendungsfälle geeignet, in denen eine Möglichkeit besteht, dem Routenberechnungsverfahren in Echtzeit einen "dynamischen Selektor" zur Verfügung zu stellen, dh. eine Information darüber, mit welchem Verkehrszustand auf den vorausliegenden Streckenstücken zu rechnen ist.

Jedoch kann dieses Verfahren nicht in solchen Anwendungsfällen eingesetzt werden, in denen kein derartiges Auswahlkriterium bzw. kein "dynamischer Selektor" zur Verfügung steht. Dies können z.B. Anwendungsfälle sein, bei denen die Navigation ohne aktuelle Informationen aus einer Service Zentrale erfolgen muss. Ebenso gilt dies für dynamische Navigation auf langen Routen (> ca. 30min. Fahrzeit) oder für die sog. "Pre-Trip" Routenplanung.

ZUSAMMENFASSUNG DER ERFINDUNG

Es ist daher Aufgabe der vorliegenden Erfindung, eine Lösung vorzuschlagen, die in vorteilhafter Weise die oben genannten Probleme überwindet.

Um die vorgenannte Aufgabe zu erreichen, wird ein Verfahren zur dynamischen Navigation von Individualverkehr vorgeschlagen, bei dem für mindestens einen Teilnehmer des Individualverkehrs aus mindestens zwei verschiedenen Routen, eine Route anhand eines Kriteriums ausgewählt wird, das eine Wahrscheinlichkeit dafür angibt, dass die Reisezeit entlang der einen Route kleiner als die Reisezeit entlang der anderen Route ist, wobei zur Bestimmung der Wahrscheinlichkeit die statistische, zeitabhängige Verteilung der Reisezeiten auf den verschiedenen Routen ermittelt und ausgewertet werden.

Die hier vorgestellte Lösung ist insbesondere für diejenigen Anwendungsfälle geeignet, in denen die Möglichkeit nicht besteht, einen "dynamischen Selektor" zu verwenden (z.B. Navigation ohne aktuelle Informationen aus einer Service Zentrale oder dynamische Navigation auf langen Routen (> ca. 30min. Fahrzeit) oder "Pre-Trip" Routenplanung).

Vorteilhafte Ausführungen sind den Unteransprüchen zu entnehmen.

DETAILLIERTE BESCHREIBUNG DER ERFINDUNG

Die vorstehenden ebenso wie die zusätzlichen Aufgaben, Merkmale und Vorteile dieser Erfindung werden noch näher aus der folgenden detaillierten Beschreibung ersichtlich, die auf die beiliegenden schematischen Zeichnungen Bezug nimmt:

Fig. 1 zeigt eine Darstellung von erhobenen Messwerten zur Fahrgeschwindigkeit des Individualverkehrs über den Zeitverlauf eines Tages;

Fig. 2a zeigt innerhalb der Messwerte (entsprechend der Fig. 1) eine durch Mittelwert-Bildung erstellte bzw. errechnete Ganglinie;

Fig. 2b zeigt noch deutlicher den zeitlichen Verlauf dieser Ganglinie aus Fig. 2a;

Fig. 3a zeigt innerhalb der Messwerte (entsprechend der Fig. 1) zwei erstellte bzw. errechnete Ganglinien;

Fig. 3b zeigt noch deutlicher den zeitlichen Verlauf dieser zwei Ganglinien aus Fig. 3a;

Fig. 4 zeigt als Ausgangssituation für eine Ausführung des erfindungsgemäßen Verfahrens zwei zur Auswahl stehende Routen;

Fig. 5 und 6 zeigen zur Veranschaulichung der Verfahrensergebnisse insbesondere reale Daten für die Verkehrsnachfrage und Erwartungswerte für die zur Auswahl stehenden Routen.

Wie in der Fig. 1 dargestellt ist, werden über den Zeitablauf t eines Tages und bezogen auf einen Streckenabschnitt die Fahrgeschwindigkeiten V von Fahrzeugen gemessen. Diese gemessene Geschwindigkeit V entspricht einer besonders aussagekräftigen Zustandsgröße des Individualverkehrs. Alternativ können z.B. die Reisezeit und zusätzlich die Verkehrsdichte als Kenngrößen herangezogen werden.

Vorzugsweise werden die Messwerte über mehrere Tage erhoben, insbesondere immer bezogen auf denselben Wochentag. Die Fig. 1 zeigt über den Zeitverlauf t eines Tages, also von 00:00 Uhr bis 24:00 Uhr, hier beispielhaft die erhobenen Messwerte für Geschwindigkeiten V, die an mehreren Dienstagen gemessen wurden. Dabei ergeben sich gewisse Anhäufungen von Messwerten. Jede Anhäufung bildet eine Punktewolke in der Darstellung der Fig. 1. Der Verlauf der Dichte der Messwerte innerhalb eines schmalen vertikalen Streifens gibt eine Häufigkeitsverteilung wieder. Diese kann z.B. einer Gaußkurve oder auch einer anderen Verteilungsfunktionen folgen (nicht dargestellt). Eine hohe Dichte von Messwerten zeigt dabei ein Maximum in der Verteilung auf.

Anhand der Darstellung in Fig. 1 kann man z.B. bei 8:00 Uhr eine Häufigkeitsverteilung mit zwei Maxima ausmachen, von denen eines bei V = 40 km/h und das andere bei V= 120 km/h liegt. Bezogen auf die betrachtete Zustandgröße, nämlich auf die Geschwindigkeit V, ergibt sich also eine bimodale Verteilung mit Anhäufung im Bereich der hohen Geschwindigkeiten Vh und der niedrigen Geschwindigkeiten Vl.

Üblicherweise würde nun, wie in Fig. 2 und 2b gezeigt, durch Mittelwertbildung eine Ganglinie GLm erstellt bzw. berechnet werden. Diese einzelne Ganglinie würde aber entlang der Schwerpunkte aller Messwert-Anhäufungen verlaufen. Wie insbesondere die Fig. 2b veranschaulicht, verläuft ein solche herkömmlich berechnete Ganglinie GLm zu weiten Teilen ohne größere Ausschläge innerhalb eines Bereiches um etwa V = 110 km/h und fällt nur an zwei Stellen, nämlich bei 8:00 Uhr und bei 17:00 Uhr deutlich auf V = 40 km/h bzw. V = 70 km/h ab.

Ausgehend von dieser üblichen Herangehensweise liegt der in DE 10 2007 026 493 beschriebenen Erfindung insbesondere die Erkenntnis zu Grunde, dass eine solche bimodale Verteilung der Zustandsgröße (z.B. Geschwindigkeit V oder auch Reisezeit) besser mit zwei Ganglinien beschrieben werden kann, als durch eine einzige Ganglinie (wie in Fig. 2a/b dargestellt).

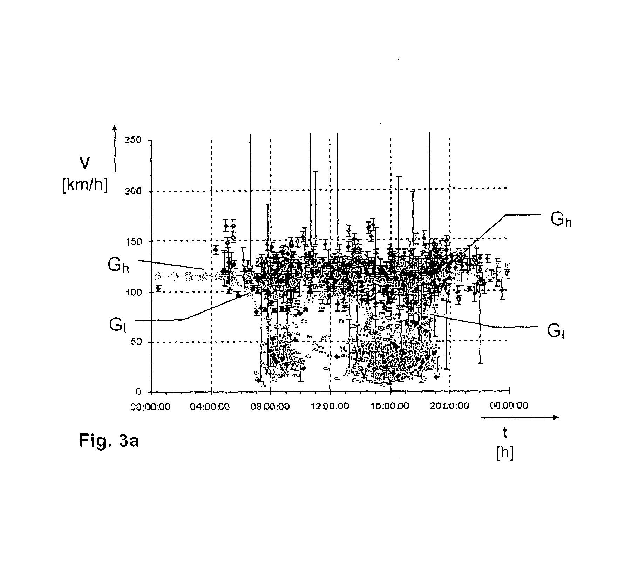

Wie in Fig. 3a gezeigt wird, werden daher anhand der erfassten Messwerte (vergl. Fig. 1) eine erste Ganglinie GLh und eine zweite Ganglinie GLl erstellt bzw. errechnet. Dabei werden entlang der Zeitachse t die sich ausprägenden Maxima berücksichtigt und zwar zum einen für den freien Verkehr im Bereich der höheren Geschwindigkeiten Vh und zum anderen für den gestörten Verkehr im Bereich der niedrigen Geschwindigkeiten Vl.

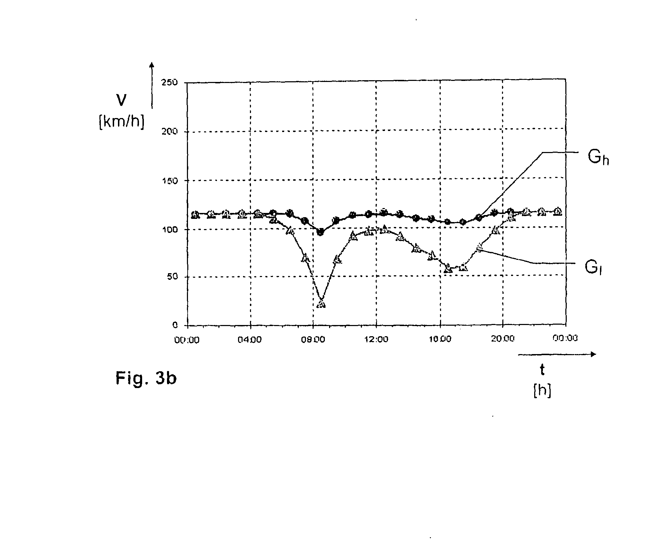

Somit erhält man eine erste, obere Ganglinie GLh für den Zustand des freien Verkehrs und eine zweite, untere Ganglinie GL1 für den Zustand des gestörten Verkehrs. Wie die Fig. 3b im Vergleich mit Fig. 3a zeigt, liegen die Ganglinien GLh und GLl in verkehrsstarken Zeiten (siehe Zeitintervall von 7:00 bis 19:00 Uhr) zum Teil weit auseinander. In verkehrsarmen Zeiten (früh Morgens vor 6:00 Uhr und Abends/Nachts nach 20:00 Uhr) fallen die beiden Ganglinien zusammen. Denn in Zeitpunkten bzw. Zeitbereichen, zu denen die Häufigkeitsverteilung nur ein Maximum ausbildet, sind die Werte der Ganglinien gleich oder nahezu gleich. Wenn GLl und GLh in verkehrsarmen Zeiten zusammenfallen, dann repräsentieren die Werte selbst wie im Text beschrieben keine unterschiedlichen V-Zustände.

Damit sind nun entsprechend der Darstellung in Fig. 3a/b zwei Ganglinien GLh und GLl ermittelt worden, die in elektronischer Form in einem Speicher abgelegt werden, um über einen "dynamischen Selektor" ausgewählt und für spätere Routenberechnungen verwendet werden zu können.

Jedoch kann dieses Verfahren nicht in solchen Anwendungsfällen eingesetzt werden, in denen kein derartiges Auswahlkriterium bzw. kein "dynamischer Selektor" zur Verfügung steht. Dies können z.B. Anwendungsfälle sein, bei denen die Navigation ohne aktuelle Informationen aus einer Service Zentrale erfolgen muss. Ebenso gilt dies für dynamische Navigation auf langen Routen (> ca. 30min. Fahrzeit) oder für die sog. "Pre-Trip" Routenplanung.

Damit eine Routenplanung auch ohne einen "dynamischen Selektor" durchgeführt werden kann, wird hier eine neue Lösung vorgeschlagen, die auf folgenden Überlegungen beruht und sich wie folgt darstellt:

Um die wahrscheinlich schnellste Route zu berechnen, ist es erforderlich, die Statistik der Reisezeit in die Routenbewertung einfließen zu lassen. Die Bildung von Ganglinien aus Mittelwerten (siehe Abbildung 2) vor der Routenbewertung ist nicht nur anschaulich ungeeignet, wie weiter oben argumentiert, sondern auch mathematisch inkorrekt. Sie unterstellt die Vertauschbarkeit von der linearen Operation der Berechnung von Ganglinien mit der nichtlinearen Operation der Routenberechnung und führt, wie wir sehen werden, dazu, dass die getroffenen Annahmen nicht erfüllt sind.

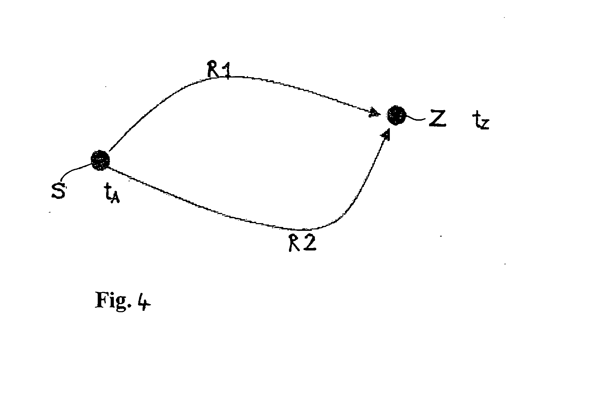

Betrachten wir zunächst den einfachsten Fall der Entscheidung zwischen zwei Alternativrouten. Siehe Abbildung 4. Zwei Routen R1 und R2 vom Start S zum Ziel Z.

Ein objektives Kriterium zur Wahl der schnellsten Route lautet:

Es wird die Route R 1 (oder R2) gewählt, falls gilt:

$$P[T1 <= T2] > P[T_1 > T_2]$$

(Kriterium 1)

Mit

$$P[T_1 \le T_2] = \int_0^\infty dt\, P[T_1 \le t] \cdot P[T_2 = t].$$

(Formel 1)

und:

$T_1$      Zufallsvariable "Reisezeit entlang der Route R1".

$T_2$      Zufallsvariable "Reisezeit entlang der Route R2".

$P[T_1 \leq T_2]$      Wahrscheinlichkeit dafür, dass die Reisezeit entlang der Route 1 kleiner als die Reisezeit entlang der Route 2 ist.

$P[Ti <= t]$      Wahrscheinlichkeitsverteilung für die Zufallsvariablen Ti (i = 1, 2) (Formel 1a)

$P[Ti = t]$      Wahrscheinlichkeitsdichte der Zufallsvariable Ti (Formel 2)

Alle Wahrscheinlichkeitsverteilungen und die Zielgröße $P[T_1 \leq T_2]$ sind Funktionen des Startzeitpunkts $t_A$ (Tagesganglinien).

Das Kriterium 1 ist aufgrund der Beziehung P[T1<=T2]=1-P[T1>T2] mathematisch äquivalent zu dem Kriterium P[T1 <=T2]>0.5

Die Darstellung der empirischen, vermessenen Reisezeitstatistik (wie z.B. in Abbildung 1) durch glatte, zeitabhängige Wahrscheinlichkeitsdichten und die Auswertung des Integrals aus Formal 1 ist für praktische Anwendungen zu aufwendig.

Wir reduzieren erfindungsgemäß die Verteilung der Reisezeiten auf das Wesentliche, nämlich ihren bimodalen Charakter wie folgt: Entlang den Routen R1 und R2 sei entweder der Verkehrszustand "frei fließender Verkehr" oder der Zustand "Verkehrszusammenbruch" realisiert. Für die Route R1 (bzw. R2) seien die Wahrscheinlichkeiten für diese Zustände 1-p (1- q) und p (q); die entsprechenden Reisezeiten seien $T_{1,f}$ ($T_{2,f}$) für den frei fließen Verkehr und $T_{1,c}$ ($T_{2,c}$) im Falle eines Verkehrszusammenbruchs. D.h.:

$$P[T_1 = t] = p \cdot \delta(t - T_{1,c}) + (1 - p) \cdot \delta(t - T_{1,f}),$$
$$P[T_2 = t] = q \cdot \delta(t - T_{2,c}) + (1 - q) \cdot \delta(t - T_{2,f}).$$

$$(\text{Formel } 3)$$

(Eine natürliche Erweiterung bestünde darin, die beiden Delta-Distributionen durch Verteilungen zu ersetzen, z.B. Normalverteilungen mit den Parametern Mittelwert und Standardabweichung. Dadurch würde die reale Verteilung noch besser abgebildet, zum Preis allerdings doppelt so vieler Parameter und schwieriger auswertbarer Integrale.)

Dann folgt:

$$P[T_1 \leq T_2] = (1 - p) \cdot (1 - q) \cdot \Theta(T_{2,f} - T_{1,f}) + (1 - p) \cdot q \cdot \Theta(T_{2,c} - T_{1,f})$$
$$+ p \cdot (1 - q) \cdot \Theta(T_{2,f} - T_{1,c}) + p \cdot q \cdot \Theta(T_{2,c} - T_{1,c}).$$

$$(\text{Formel } 4)$$

$$\Theta(x) = \begin{cases} 1, & x \geq 0 \\ 0, & x < 0 \end{cases}$$

Zur Verdeutlichung betrachten wir einen Spezialfall:

$T_{1,f} = 10$ min,
$T_{2,f} = 12$ min,
$T_{1,c} = 30$ min,
$T_{2,c} = 14$ min,
p = 0,4,
q = 0,6

$$P[T1<=T2] = 0,6 \times 0,4 \times 1 + 0,6 \times 0,6 \times 1 + 0,4 \times 0,4 \times 0 + 0,4 \times 0,6 \times 0 = 0,6$$

(Formel 5)

Hiernach ist die Route 1 die wahrscheinlich schnellere.

In der nachfolgenden Tabelle sind diejenigen Fälle, für die T1<=T2 gilt, durch Unterstreichung hervorgehoben; die Gesamtwahrscheinlichkeit für diese Fälle ist:

$$P[T1<=T2] = (1-p) = 0,6$$

|  |  | $T_1$ | |
|---|---|---|---|
|  |  | 10 min | 30 min |
| $T_2$ | 12 min | (1 - p) x (1 - q) = 0.24 | p x (1 - q) = 0,16 |
|  | 14 min | (1 - p)*q = 0.36 | p x q = 0,24 |

Betrachten wir demgegenüber das Ergebnis der Routenwahl mittels einer herkömmlichen Vorgehensweise, nämlich mittels mittelwertbasierten Ganglinien:

Die Erwartungswerte der Zufallsvariablen $T_1$ und $T_2$ zum betrachteten, festen Zeitpunkt (ein Eintrag in der Ganglinie) sind

$$\langle T_1 \rangle = (1-p) \cdot T_{1,f} + p \cdot T_{1,c} = 0.6 \cdot 10\,min + 0.4 \cdot 30\,min = 18\,min,$$

$$\langle T_2 \rangle = (1-q) \cdot T_{2,f} + q \cdot T_{2,c} = 0.4 \cdot 12\,min + 0.6 \cdot 14\,min = 13.2\,min.$$

Danach würde die Route R2 als die schnellere ausgewählt, was jedoch - bei Berücksichtigung der vollen Statistik der Reisezeit gezeigt hat - falsch ist.

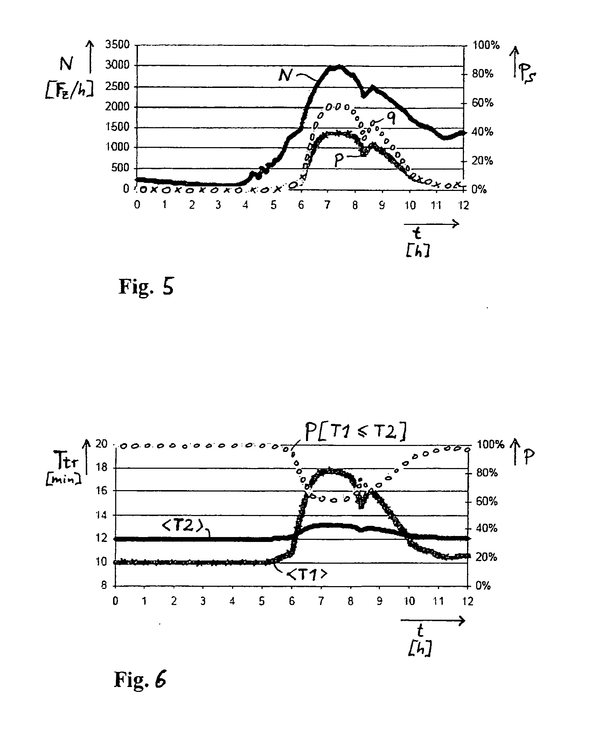

Um den Gangliniencharakter der vorstehenden Überlegung zu verdeutlichen, ist in den Fig. 5 und 6 anhand realer Daten der zeitliche Verlauf der Größen p und q sowie das Ergebnis der Routenwahl nach dem naiven und nach dem hier vorgeschlagenen Verfahren dargestellt. Wir sehen, dass das naive Verfahren zwischen ca. 6:00 Uhr und ca. 10:00 Uhr zum falschen Ergebnis kommt und den Nutzer entgegen seiner Anforderung auf die wahrscheinlich langsamere Route schickt.

Die Fig. 5 zeigt reale Daten für die Verkehrsnachfrage von der A52 Düsseldorf Nord (durchgehende Linie N) und hierfür resultierende Störfallwahrscheinlichkeiten bezogen auf eine Route 1 (mit Kreuzen versehene Linie p) und eine Route 2 (mit Kreisen versehene Linie q). Um ca. 07:30 werden die Werte p=0.4 und q=0.6 des Beispiels aus dem Haupttext erreicht.

In der Fig. 6 sind Erwartungswerte der Reisezeit für die Route 1 (mit Kreuzen versehene Linie <T1>) und die Route 2 (Linie <T2>) dargestellt, wobei die Delta-distributive Verteilung der Reisezeit wie im Haupttext beschrieben mit den Parametern T1_f=10 min, T1_c=30 min, T2_f=12 min und T2_c=14 min gewählt ist. Die Wahrscheinlichkeit P [T1<=T2] dafür (mit Kreisen versehene Linie P), dass die Reisezeit entlang der Route 1 kleiner als die Reisezeit entlang der Route 2 ist bricht zwar zu dem Zeitpunkt, zu dem die Erwartungswerte der Reisezeit entlang den Routen 1 und 2 beginnt anzusteigen ein, verbleibt aber immer oberhalb von 60 %. D.h. die Route 1 ist ganztägig die wahrscheinlich schnellste Route, obwohl der Erwartungswert für die Reisezeit auf der Route 2 zwischen ca. 06:00 und ca. 10:00 kleiner ist als der Erwartungswert für die Reisezeit auf Route 1.

Zur Überwindung der Probleme wird hier nun vorgeschlagen, die statistische Daten zur Reisezeit wie folgt in die Routenbewertung einzukoppeln:

(1) Darstellung der Reisezeitstatistik durch Wahrscheinlichkeitsdichten wie in Formel 2, vorzugsweise in einer vereinfachten Form, wozu sich wegen des bimodalen Charakters der Verteilung von realen Reisezeiten auf Netzkanten eine Darstellung durch zwei Delta-Distributionen anbietet wie in Formel 3.

(2) Bei der vergleichenden Bewertung zweier Routen Auswertung der vollen Reisezeitstatistik wie in Formel 1, vorzugsweise im Spezialfall von Delta-Verteilungen wie in Formel 4.

(3) Auswahl der wahrscheinlich schnelleren Route anhand des Kriteriums 1, vorzugsweise im Spezialfall von Delta-Verteilungen wie in Formel 5.

Für den allgemeinen Fall der Routensuche in einem beliebigen Netz sind noch folgende Überlegungen anzustellen:

Typischerweise liegt die Reisezeitstatistik nicht für die komplette Route vor, sondern für viele einzelne Netzkanten, aus denen die Verteilung der Reisezeiten auf der Route hergeleitet werden muss. Nehmen wir also an, die Route 1 aus Abbildung 3 bestünde aus zwei Kanten, Kante 1 und Kante 2, für die jeweils eine Wahrscheinlichkeitsdichte existiert:

$$P\left[T_1^1 = t\right] \qquad \text{Wahrscheinlichkeitsdichte der Zufallsvariable "Reisezeit entlang der Kante 1 auf Route R1"}$$

$$P\left[T_1^2 = t\right] \qquad \text{Wahrscheinlichkeitsdichte der Zufallsvariable "Reisezeit entlang der Kante 2 auf Route R1"}$$

Unterstellt man statistische Unabhängigkeit der Zufallsvariablen, was z.B. durch eine verkehrstechnisch motivierte Zusammenfassung von Netzkanten näherungsweise sichergestellt werden kann, so ergibt sich die gesuchte Wahrscheinlichkeitsdichte der Zufallsvariable "Reisezeit entlang der Route 1" $P\left[T_1 = t\right]$ wie folgt:

$$P[T_1 = t] = \int_0^t dt' \, P\left[T_1^1 = t'\right] P\left[T_1^2 = t - t'\right]$$

Entsprechend ergibt sich für n Netzkanten ein (n-1)-faches Integral.

Setzen wir nun wieder den praxisrelevanten Fall der deltaverteilten Reisezeiten für beide Netzkanten an

$$P\left[T_1^1 = t\right] = p_1 \cdot \delta(t - T_{1,c}^1) + (1 - p_1) \cdot \delta(t - T_{1,f}^1),$$

$$P\left[T_1^2 = t\right] = p_2 \cdot \delta(t - T_{1,c}^2) + (1 - p_2) \cdot \delta(t - T_{1,f}^2).$$

so ergibt die Auswertung des Integrals

$$P[T_1 = t] = p_1 p_2 \delta\left(t - (T_{1,c}^1 + T_{1,c}^2)\right) + p_1(1 - p_2)\delta\left(t - (T_{1,c}^1 + T_{1,f}^2)\right)$$
$$+ (1 - p_1)p_2 \delta\left(t - (T_{1,f}^1 + T_{1,c}^2)\right) + (1 - p_1)(1 - p_2)\delta\left(t - (T_{1,f}^1 + T_{2,f}^2)\right)$$

Auf diese Art und Weise können auf Netzkanten gemessene Reisezeitverteilungen für die Routenbewertung herangezogen werden. Aus Integralen sind auch auf einfachen Endgeräten leicht auswertbare Summen geworden.

Der Vergleich von mehr als zwei Routen schließlich kann trivial auf den jeweils paarweisen Vergleich zurückgeführt werden.

Abschließend sei erwähnt, dass das hier vorgeschlagene Verfahren nicht nur zur Auswahl einer Route anhand des Kriteriums 1 genutzt werden kann, sondern auch (durch Auswertung der Formel 1a) zur Bestimmung der Wahrscheinlichkeit, dass eine geschätzten Ankunftszeit tatsächlich erreicht wird (einer "Terminerreichungs-Wahrscheinlichkeit") oder alternativ zur Berechnung einer Ankunftszeit die mit einer vorgebbaren Wahrscheinlichkeit (z.B. ">90%") erreicht werden soll.

Zusammenfassend wird ein Verfahren zur Routenwahl und/oder zur Bestimmung der Wahrscheinlichkeit von geschätzten Ankunftszeiten und/oder zur Bestimmung einer Ankunftszeit mit vorgegebener Erreichungswahrscheinlichkeit vorgeschlagen, bei welchem die statistische Verteilung von Reisezeiten auf Netzkanten oder Routen, vorzugsweise in Form von bimodalen, im Extremfall delta-artigen Verteilungen berücksichtigt wird.

Die Anwendung der Erfindung findet insbesondere während einer Routenberechnung statt, um eine geeignete Prognose über den auftretenden Verkehr zu liefern. Insbesondere wird eine Vorhersage der Reisezeit durch z.B. Auswertung historischer Daten oder auch durch andere Ausgangsdaten (Zufallsvariablen) durchgeführt. Dabei wird von der Erkenntnis ausgegangen, dass die Verteilung einen bimodalen Charakter aufweist, so dass immer zwei Zustände betrachtet und berücksichtigt werden, nämlich freier Verkehr und gestörter Verkehr. Durch diese differenzierte Betrachtungsweise wird eine zuverlässigere Wahrscheinlichkeitsverteilung für die Reisezeit errechnet, die z.B. in Form einer Delta-Distribution beschrieben werden kann. Würde beispielsweise für jede von zwei betrachteten Routen oder Teilrouten nur eine zeitanhängige Verteilung bzw. Prognose zum Startzeitpunkt durchgeführt, so ergäbe sich z.B. für die erste Route eine Eintritts-Wahrscheinlichkeit von 80% für gestörten Verkehr und eine Eintritts-Wahrscheinlichkeit von 20% für freien Verkehr. Diese Eintritts-Wahrscheinlichkeiten aber würden lediglich aussagen, in welchem Ausmaß mit einer Störung auf der ersten Route gerechnet werden müsste. Dies allein würde jedoch nicht für eine verkehrstechnisch angemessene Prognose aussreichen. Deshalb werden die Reisezeiten zusätzlich auch entsprechend vorliegender Ganglinien berücksichtigt, was zu einer differenzierten Betrachtung führt, wie sie oben insbesondere anhand der Tabelle beschrieben worden ist.

Wie auch die zuvor gezeigte Tabelle verdeutlicht, wird also eine Matrix für mindestens zwei Routen aufgespannt, die für jede einzelne Route eine Realisierung einer Reisezeit T1 bzw. T2 angibt sowie die anhand der bimodalen Verteilung berechneten dazugehörigen Eintritts-Wahrscheinlichkeiten. Somit ergibt sich z.B. für den Fall T1=10 Min. und T2 = 12 Min. eine Eintrittswahrscheinlichkeit von 0,24 für den Fall, dass gilt: T1 ≤ T2. Mit anderen Worten wird die Reisezeit T1 mit einer Wahrscheinlichkeit von 0,24 kleiner sein als die Reisezeit T2. Insgesamt ergeben sich theoretisch 4 Möglichkeiten mit jeweils unterschiedlichen Eintrittswahrscheinlichkeiten, nämlich 0,24 oder 0,16 bzw. 0,36 oder 0,24. Die unterstrichenen Werte geben die Eintrittswahrscheinlichkeiten an für den Fall, dass T1 ≤ T2 ist. So gilt bei einer realisierten Reisezeit von T1 = 10 Min. und einer Reisezeit T2 = 14 Minuten, dass die Eintrittswahrscheinlichkeit 0,36 beträgt. Insgesamt durch Addition beider Werte ergibt sich eine Eintrittswahrscheinlichkeit von 0,6 für den Fall, dass die Route 1 besser bzw. schneller als die Route 2 ist.

Hingegen würde bei einer simplen Betrachtungsweise sich lediglich Mittelwerte über die statistische Verteilung wiedergeben, wonach dann für die Route 1 T1 im Mittel 18 Min. zu veranschlagen sind und für die Route 2 T2 im Mittel 13,2 Min. Im Ergebnis würde man sich dann für die Route 2 entschließen, was jedoch falsch oder zumindest nachteilig ist, wie die die oben beschriebene differenzierte Betrachtungsweise anhand der Tabelle zeigt.

In der Erfindung werden folgende Kerngedanken widergespiegelt:

a) Dynamische Navigation erfordert Vorhersagen über Reisezeiten für Kanten und (daraus abgeleitet) für Routen;

b) Reisezeitvorhersagen sind aufgrund der stochastischen Natur von Verkehrszusammenbrüchen unscharf und müssen durch eine Verteilung beschrieben werden, da stets mindestens die beiden gegensätzlichen Verkehrszustände "frei" und "gestört" eintreten können, die sich quantitativ deutlich verschieden auf die Reisezeit auswirken;

c) Routenwahlkriterien werden aufgrund der Unschärfe der Reisezeit ebenfalls unscharf. (anstatt "schnellste Route" nur "wahrscheinlich schnellste Route");

d) Durch geeignete Parametrierung der Verteilungen (z.B. delta-distributives Zwei-Zustandsmodell) läßt sich:

i) die statistische Natur der Reisezeitvorhersage einfangen und
ii) eine praxistaugliche Berechnungsvorschrift, die z.B. für Endgeräte geeignet ist, angeben;

e) Ad-hoc-Kriterien, die beispielsweise allein auf Kenngrößen der Verteilungen beruhen (z.B. Erwartungswerte) sind deshalb nicht erforderlich und führen zu Ergebnissen, die verschieden von den Ergebnissen sind, die sich bei vollständiger Berücksichtigung der Statistik der Reisezeit ergeben.

Mit der hier vorgestellten Erfindung wird eine differenzierte Betrachtungsweise anhand einer bi-modalen Verteilung vorgenommen. Das vorgeschlagene Verfahren ist verkehrstechnisch angemessen, für die Anwendung geeignet und in sich konsistent.

Die Erfindung ist auch auf einzelne Teilrouten bzw. Teilabschnitte anwendbar, wobei eine Termin-Erreichungs-Wahrscheinlichkeit berechnet werden kann, die angibt, mit welcher Wahrscheinlichkeit der Verkehrsteilnehmer das Ziel erreichen kann.

**Patentansprüche**

1. Verfahren zur Auswahl einer Route für eine dynamische Navigation von Individualverkehr , bei dem für mindestens einen Teilnehmer des Individualverkehrs aus mindestens zwei verschiedenen Routen (R1, R2), eine Route (R1) anhand eines Kriteriums ausgewählt wird, das eine Wahrscheinlichkeit (P) dafür angibt, dass die Reisezeit (T1) entlang der einen Route (R1) kleiner als die Reisezeit (T2) entlang der anderen Route (R2) ist, wobei zur Bestimmung der Wahrscheinlichkeit (P) die statistische, zeitabhängige Verteilung der Reisezeiten auf den verschiedenen Routen (R1, R2) ermittelt und ausgewertet werden.

2. Verfahren nach Anspruch 1, wobei die statistischen Verteilungen aus historischen Werten, insbesondere aus historischen Reisezeiten, ermittelt und ausgewertet werden.

3. Verfahren nach Anspruch 1 oder 2, wobei die statistischen Verteilungen näherungsweise durch bimodale Verteilungen beschrieben und in dieser Form ausgewertet werden.

4. Verfahren nach einem der vorhergehenden Ansprüche, wobei die statistischen Verteilungen der Reisezeiten (T1, T2) durch Wahrscheinlichkeitsdichten in Form von zwei Delta-Verteilungen näherungsweise ermittelt werden.

5. Verfahren nach einem der vorhergehenden Ansprüche, wobei die Routen (R1, R2) in mehrere Teilabschnitte, insbesondere in Netzwerkkanten, unterteilt werden und das Verfahren für einzelne dieser Teilabschnitte durchgeführt wird.

6. Verfahren nach Anspruch 5, wobei eine Termin-Erreichungs-Wahrscheinlichkeit berechnet wird, die angibt, mit welcher Wahrscheinlichkeit der Verkehrsteilnehmer das Ziel zum gewünschten Zeitpunkt erreicht.

7. Verfahren nach einem der vorhergehenden Ansprüche, wobei die bimodalen Verteilungen jeweils anhand von zwei Ganglinien (Gh, Gl) aus einer Kenngröße des Individualverkehrs ermittelt werden.

8. Verfahren nach Anspruch 4, wobei die Kenngröße mindestens einer Zustandsgröße für den Individualverkehr entspricht, insbesondere Reisezeit und/oder Reisegeschwindigkeit.

9. Verfahren nach Anspruch 4, wobei die Kenngröße mindestens einer aus einer oder mehreren Zustandsgrößen für den Individualverkehr abgeleiteten Größe entspricht, insbesondere Reisezeit und/oder durchschnittliche Tagesverkehrswerte.

10. Verfahren nach einem der Ansprüche 4 bis 6, wobei zur Ermittlung der Ganglinien (Gh, Gl) jeweils Häufigkeitsverteilungen der Kenngröße herangezogen werden, und wobei jede Häufigkeitsverteilung die Häufigkeit von Messwerten der Kenngröße zu einer bestimmten Zeit innerhalb des Zeitintervalls, insbesondere zu einer Tageszeit innerhalb eines Wochentages, wiedergibt.

11. Verfahren nach einem der Ansprüche 4 bis 7, wobei die Kenngröße mindestens einen Parameter für den Verkehrszustand des Individualverkehrs beschreibt, insbesondere Fahrgeschwindigkeit, Reisezeit und/oder Verkehrsdichte, beschreibt.

12. Verfahren nach Anspruch 5, wobei anhand der Zustandsgröße auf den Verkehrszustand des Individualverkehrs geschlossen wird, insbesondere auf einen Verkehrszustand für freien Verkehr oder für gestörten Verkehr.

13. Verfahren nach einem der Ansprüche 4 bis 9, wobei die Ganglinien (Gh, Gl) als Bestandteil von digitalen Karten auf einem Datenträger gespeichert werden, insbesondere auf einem tragbaren Datenträger in Gestalt einer CD oder eines Speicherchips, der in ein mobiles Endgerät einführbar ist, gespeichert werden.

Fig. 1

Fig. 2a

Fig. 2b

EP 2 071 287 A2

V
[km/h]

250

200

150

$G_h$

100

$G_l$

50

0

00:00:00  04:00:00  08:00:00  12:00:00  16:00:00  20:00:00  00:00:00

$G_h$

$G_l$

t
[h]

Fig. 3a

Fig. 3b

Fig. 4

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007026493